# EUROPEAN PATENT APPLICATION

(11) **EP 4 501 702 A1**
(43) Date of publication of application: **05.02.2025**
(21) Application number: 23773532.9
(22) Date of filing: 22.02.2023
(51) Int. Cl.: B60N 2/07

(54) **ROLLER AND SLIDING COLUMN COMPOSITE SLIDING RAIL BEARING SYSTEM**

(30) Priority: 25.03.2022 CN 202210306097
(71) Applicant: Yanfeng International Automotive Technology Co., Ltd., Shanghai 201306 (CN)
(72) Inventor: HE, Yanyan, Shanghai 201306 (CN)
(74) Representative: Botti & Ferrari S.p.A.
(86) International application number: PCT/CN2023/077559
(87) International publication number: WO 2023/179281

(57) **Abstract**

The present invention discloses a roller-sliding column composite sliding rail carrier system, comprising an upper sliding rail, a lower sliding rail and a holding bracket, wherein the upper sliding rail and the lower sliding rail are of a lateral asymmetric structure; an upper rail-first side of the upper sliding rail is in contact with the lower sliding rail via a combined structure of at least one roller mechanism and at least one first holding bracket, so that the upper sliding rail and the lower sliding rail reduce their motion friction coefficients under the premise of guaranteeing lateral stiffness. By arranging the sliding column holding bracket and the roller mechanism between the upper and lower sliding rails in an asymmetric carrying structure, the friction loss of the sliding rail system is reduced, and the durability is improved while satisfying its lateral stiffness.

## Description

### Technical Field

The present invention relates to the field of automotive seat sliding rail, and in particular relates to a roller-sliding column composite sliding rail carrier system.

### Background of Invention

In the automotive seat sliding rail system, the carrying means between the upper rail and the lower rail is mainly divided into three forms, namely, steel ball/pin roller, roller and sliding column.

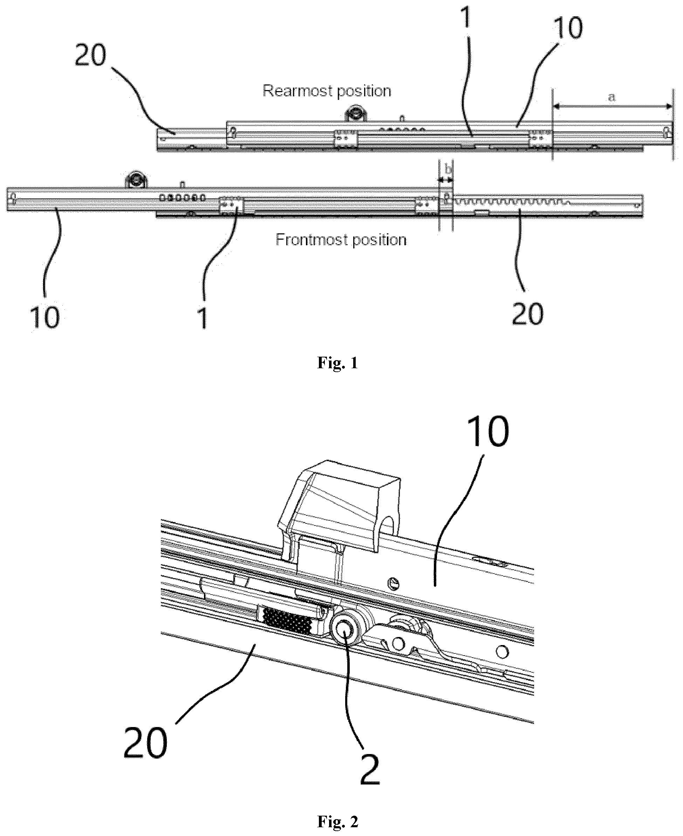

The steel ball/pin roller form of carrier system (Fig. 1) is characterized by the fact that when the upper rail 10 is adjusted with respect to the lower rail 20, the rolling carrying mechanism 1 is simultaneously displaced with respect to the upper rail 10 and the lower rail 20. Influenced by the design travel proportioning relationship, the travel of the sliding rail system depends on the length L1 of the upper rail 10 and the length L2 of the carrying mechanism 1, with a maximum travel of L=(L1-L2)*2, and in addition to this is limited by the length of the lower rail 20. Also, the modal test evaluation of the seat is affected as the distance of the carrying mechanism 1 relative to the rear end of the upper rail 10 varies. For example, when the upper rail 10 is located in the rearward position of its travel, at which point the cantilever a of the sliding rail system is the largest, its modal test results are the worst. Conversely, when it is located in the most forward position, the cantilever b is the smallest.

The roller form carrier system (Fig. 2) moves the upper rail 10 relative to the lower rail 20 by synchronizing the movement of the roller 2 with the upper rail 10. However, this type of carrying structure laterally fails to provide support to the upper rail 10, resulting in poor lateral stiffness. Adding an additional support structure will cause the sliding rail structure to be too complex.

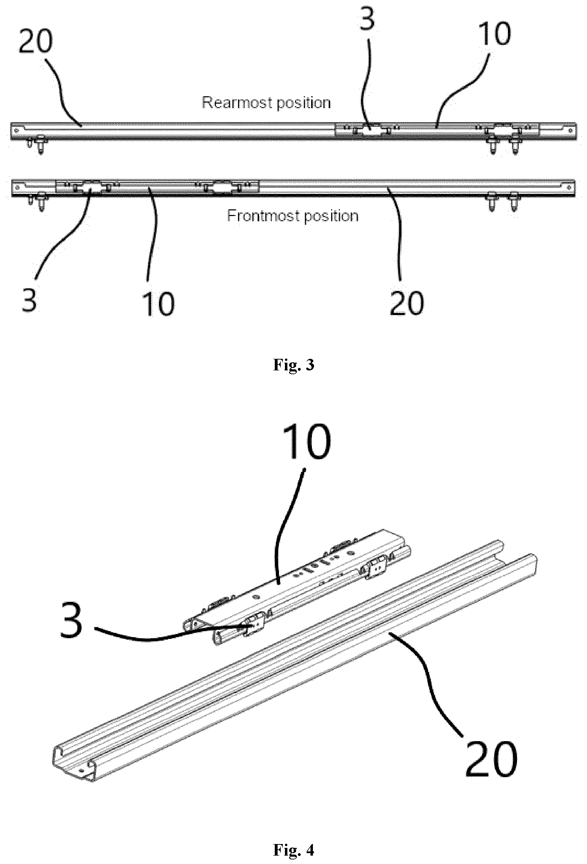

The sliding column form carrier system with common symmetrical structure (Fig. 3 to Fig. 5) although solved the problems of too long cantilever in the steel ball/pin roller carrying form, and poor lateral stiffness in the roller carrying form. However, the contact friction between the sliding column carrying mechanism 3 and the upper rail 10 and lower rail 20 is in the form of sliding friction, resulting in a large friction coefficient thereof. At the same time, because of its large contact area, under the same load durability, the lubricating grease is easily pushed to both sides of the sliding rail travel, resulting in a further increase in friction force, exacerbating the wear and tear of the rail system.

### Summary of Invention

In order to realize the above purpose, the technical solution adopted in the present invention is:
A roller-sliding column composite sliding rail carrier system, comprising an upper sliding rail, a lower sliding rail and a holding bracket, characterized in that
the upper sliding rail and the lower sliding rail are of a lateral asymmetric structure;
an upper rail-first side of the upper sliding rail is in contact with the lower sliding rail via a combined structure of at least one roller mechanism and at least one first holding bracket, so that the upper sliding rail and the lower sliding rail reduce their motion friction coefficients under the premise of guaranteeing lateral stiffness.

In a preferred embodiment of the present invention, the roller mechanism is provided at the lower part of the upper rail-first side and provides motion support;
the first holding bracket is provided between an upper rail-first outer side and a lower rail-first side to provide motion support for the upper part of the upper rail-first side.

In a preferred embodiment of the present invention, the roller mechanism comprises a roller, a roller shaft axially provided in the roller, and a shaft sleeve provided between the roller shaft and the roller.

In a preferred embodiment of the present invention, at least one roller shaft fixing hole is provided at the lower part of an upper rail-first inner side and the lower part of an upper rail-first outer side, wherein the roller mechanism is mounted at the lower part of the upper rail-first side via the roller shaft and is in contact with a lower rail-first support surface on the lower sliding rail.

In a preferred embodiment of the present invention, at least one sliding column is provided on the first holding bracket, wherein the sliding column is in contact with the upper sliding rail and the lower sliding rail and provides support.

In a preferred embodiment of the present invention, it further comprises:
at least one second holding bracket provided between an upper rail-second outer side and a lower rail-second side;
at least one pair of second stop ends provided on the upper rail-second outer side, wherein the second holding bracket is provided between the second stop ends.

In a preferred embodiment of the present invention, at least two sliding columns are provided at the upper part and lower part of the second holding bracket, wherein the second holding bracket is in contact with the upper sliding rail and the lower sliding rail via the sliding columns and provides motion support.

In a preferred embodiment of the present invention, the lower part of the second holding bracket is in contact with a lower rail-second support surface of the lower sliding rail via the sliding columns, wherein the lateral width of the lower rail-second support surface is smaller than that of the lower rail-first support surface.

In a preferred embodiment of the present invention, a harness cavity is provided between the lower rail-first support surface, the rail bracket and the lower rail-first side, wherein the harness cavity is used for storing a seat harness.

In a preferred embodiment of the present invention, at least a pair of first stop ends are provided on the upper rail-first outer side, wherein the first holding bracket is arranged between the first stop ends.

The beneficial effect of the present invention is the following:
A roller-sliding column composite sliding rail carrier system provided by the present invention, by arranging the sliding column holding bracket and the roller mechanism in an asymmetric carrying structure between the upper and lower rails, reduces the friction loss of the sliding rail system and improves the durability while satisfying its lateral stiffness.

### Brief Description of Drawings

In order to more clearly illustrate the technical solutions in the embodiments of the present invention or in the prior art, the accompanying drawings to be used in the description of the embodiments or prior art will be briefly described below.
Fig. 1 is a schematic diagram of a sliding rail system in the prior art in the form of a steel ball/roller carrier.
Fig. 2 is a schematic diagram of a sliding rail system in the prior art in the form of a roller carri er.
Fig. 3 is a first schematic diagram of a sliding rail system in the form of a sliding column carrier in the symmetrical structure in the prior art.
Fig. 4 is a second schematic diagram of a sliding rail system in the form of a sliding column carrier in the symmetrical structure in the prior art.
Fig. 5 is a third schematic diagram of a sliding rail system in the form of a sliding column carrier in the symmetrical structure in the prior art.
Fig. 6 is a sectional view of the present invention.
Fig. 7 is an exploded view of a roller mechanism of the present invention.
Fig. 8 is an isometric view of the roller mechanism of the present invention after assembly.
Fig. 9 is a schematic diagram of the location of the harness cavity of one embodiment of the present invention.
Fig. 10 is a comparison diagram of the present invention with the prior art.

### Detailed Description of Drawings

In the description of the present invention, it is noted that the terms "up", "down", "left", "right", "inside", "outside", etc. indicate an orientation or positional relationship based on that shown in the accompanying drawings, and the terms "longitudinal (X-direction) ", "lateral (Y-direction) ", "vertical (Z-direction)" are terms of the spatial coordinate system in the automotive field, which are technical terms known to those in the technical field, and the above descriptions are intended to facilitate the description of the present invention and to simplify the description, and are not intended to indicate or to imply that the device or element referred to must have a specific orientation, be constructed and operated with a specific orientation, and therefore are not to be construed as a description of the present invention.

The detailed structure of the present invention is further described below in connection with the accompanying drawings and specific embodiments.

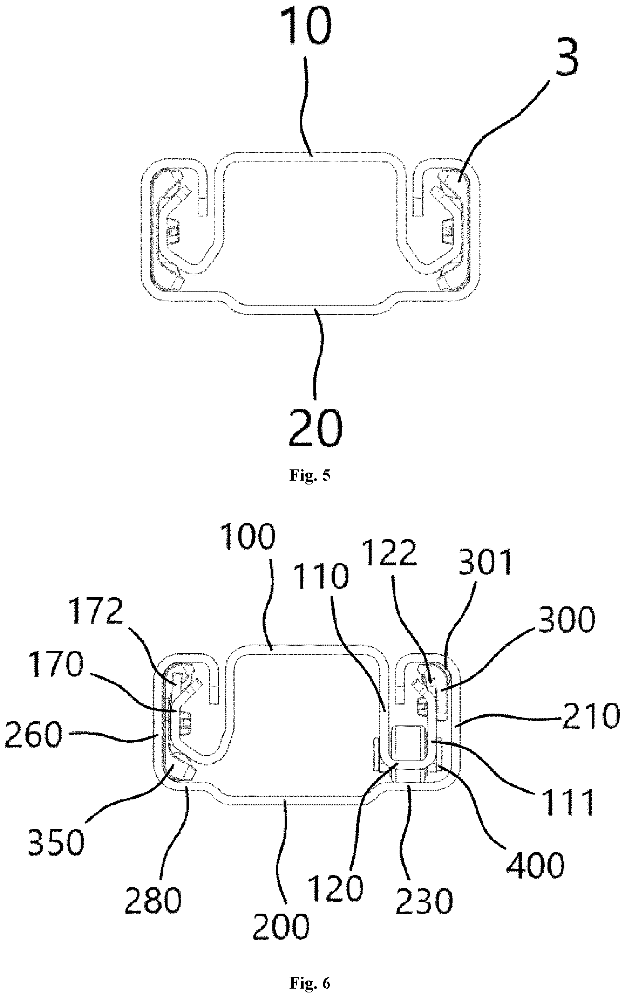

Referring to Fig. 6, a roller-sliding column composite sliding rail carrier system mainly comprises: a laterally asymmetric upper sliding rail 100 and a lower sliding rail 200; a roller mechanism 400 provided at an upper rail-first side 120 of the upper sliding rail 100, such that one of the contact surfaces of the upper sliding rail 100 and the lower sliding rail 200 is contacted by the roller mechanism 400; a first holding bracket 300 and a second holding bracket 350 provided between the upper sliding rail 100 and the lower sliding rail 200.

The upper rail-second outer side 170 uses the second holding bracket 350 in a conventional manner to contact the upper part and lower part of the lower rail-second side 260 via sliding columns 301 arranged at the upper part and lower part of the second holding bracket 350. When the upper sliding rail 100 is moved relative to the lower sliding rail 200, the movement position of the second holding bracket 350 relative to the upper sliding rail 100 is limited by the second stop end 172 provided with its two ends located on the upper rail-second outer side 170.

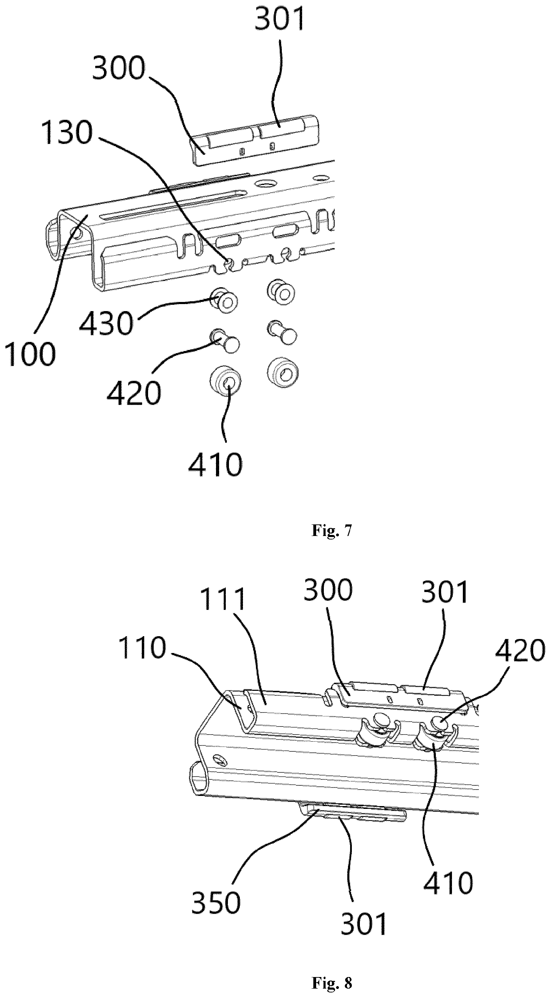

With combined reference to Figs. 7 and 8, a pair of roller shaft fixing holes 130 are provided in lateral correspondence at the bottoms of the upper rail-first side 110 and the upper rail-first outer side 111. The roller mechanism 400 comprises a roller shaft 420, a roller 410, and a shaft sleeve 430. After the roller shaft 420 passes through the center of the roller 410, two ends of the roller shaft 420 are jammed into the roller shaft fixing holes 130, such that the roller shaft 420 is placed between the upper rail-first inner side 110 and the upper rail-first outer side 111. A shaft sleeve 430 is provided between the roller shaft 420 and the roller 410, thereby reducing friction between the roller 410 and the roller shaft 420. A first holding bracket 300 is arranged between the upper rail-first outer side 111 and the lower rail-first side 210, and a sliding column 301 is likewise arranged on the first holding bracket 300 and the first holding bracket is limited in movement by first stop ends 122 on the upper rail-first outer side 111. The upper rail-first outer side 111 is in contact with the upper part of the lower rail-first side 210 only by its upper part via the first holding bracket 300. The first holding bracket 300 is asymmetric with the second holding bracket 350. The lower part of the upper rail-first outer side 111 is in contact with a lower rail-first support surface 230 at the bottom of the lower sliding rail 200 via roller 410.

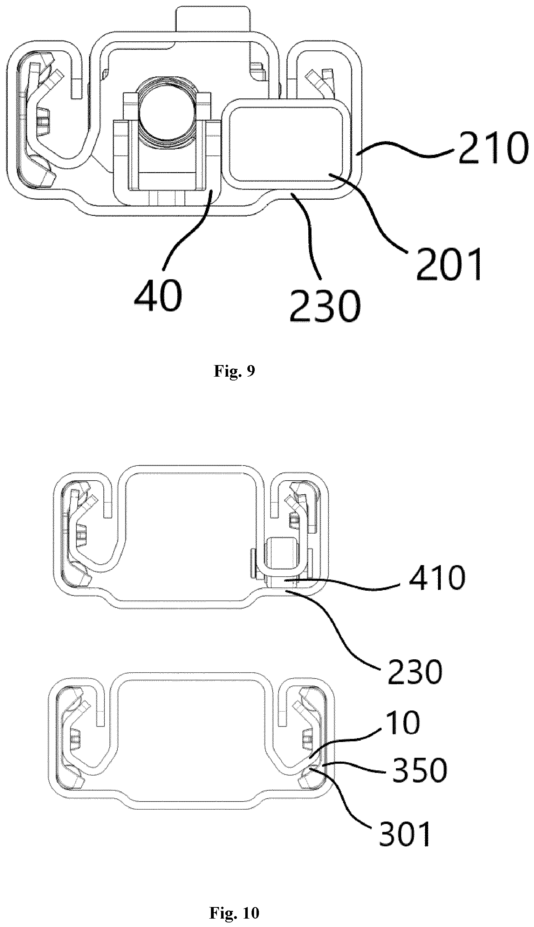

Referring to Fig. 9 in a preferred embodiment of the present invention, one side of the upper sliding rail 100 is in contact with the lower sliding rail 200 via the sliding column 301, while the other side is in contact with the lower sliding rail 200 using a sliding column 30 - roller 410 composite, and as a result, the lateral dimensions of the lower rail-first support surface 230, which is in contact with the roller 410, are larger than those of the lower rail-second support surface 280, which is in contact with the lower rail via the sliding column 301. This makes the space dimensions between the rail bracket 40 and the lower rail-first side 210 larger, allowing the arrangement of a harness cavity 201 with a lateral cross-sectional dimension of less than 22 mm * 15 mm for accommodating a long sliding rail harness to pass through it.

Referring to Fig. 10, when one side of the upper sliding rail 100 is in contact with the lower rail-first support surface 230 via the roller 410, the friction of the contact surface is in the form of rolling friction, with a friction coefficient of about 0.01, while when contacting via the sliding column 301, the friction of the contact surface is in the form of sliding friction, with a coefficient of friction of about 0.05. In case of adopting the above-described the upper sliding rail 100 and the lower sliding rail 200 with asymmetric structure of the present invention, one side of which adopts the sliding column 30 - roller 410 composite, the friction coefficient can be reduced to 0.03. At the same time, with the structural feature of providing an oil storage groove in the sliding column 301, the friction loss can be reduced and the durability can be improved while satisfying the lateral stiffness of the sliding rail system.

## Claims

1. A roller-sliding column composite sliding rail carrier system, comprising an upper sliding rail, a lower sliding rail and a holding bracket, **characterized in that**
the upper sliding rail and the lower sliding rail are of a lateral asymmetric structure;
an upper rail-first side of the upper sliding rail is in contact with the lower sliding rail via a combined structure of at least one roller mechanism and at least one first holding bracket, so that the upper sliding rail and the lower sliding rail reduce their motion friction coefficients under the premise of guaranteeing lateral stiffness.

2. The roller-sliding column composite sliding rail carrier system as claimed in claim 1, **characterized in that** the roller mechanism is provided at the lower part of the upper rail-first side and provides motion support;
the first holding bracket is provided between an upper rail-first outer side and a lower rail-first side to provide motion support for the upper part of the upper rail-first side.

3. The roller-sliding column composite sliding rail carrier system as claimed in claim 2, **characterized in that** the roller mechanism comprises a roller, a roller shaft axially provided in the roller, and a shaft sleeve provided between the roller shaft and the roller.

4. The roller-sliding column composite sliding rail carrier system as claimed in claim 3, **characterized in that** at least one roller shaft fixing hole is provided at the lower part of an upper rail-first inner side and the lower part of an upper rail-first outer side, wherein the roller mechanism is mounted at the lower part of the upper rail-first side via the roller shaft and is in contact with a lower rail-first support surface on the lower sliding rail.

5. The roller-sliding column composite sliding rail carrier system as claimed in claim 2, **characterized in that** at least one sliding column is provided on the first holding bracket, wherein the sliding column is in contact with the upper sliding rail and the lower sliding rail and provides support.

6. The roller-sliding column composite sliding rail carrier system as claimed in any one of claims 1 to 5, **characterized in that** it further comprises:
at least one second holding bracket provided between an upper rail-second outer side and a lower rail-second side;
at least one pair of second stop ends provided on the upper rail-second outer side, wherein the second holding bracket is provided between the second stop ends.

7. The roller-sliding column composite sliding rail carrier system as claimed in claim 6, **characterized in that** at least two sliding columns are provided at the upper part and lower part of the second holding bracket, wherein the second holding bracket is in contact with the upper sliding rail and the lower sliding rail via the sliding columns and provides motion support.

8. The roller-sliding column composite sliding rail carrier system as claimed in claim 7, **characterized in that** the lower part of the second holding bracket is in contact with a lower rail-second support surface of the lower sliding rail via the sliding columns, wherein the lateral width of the lower rail-second support surface is smaller than that of the lower rail-first support surface.

9. The roller-sliding column composite sliding rail carrier system as claimed in claim 7, **characterized in that** a harness cavity is provided between the lower rail-first support surface, the rail bracket and the lower rail-first side, wherein the harness cavity is used for storing a seat harness.

10. The roller-sliding column composite sliding rail carrier system as claimed in claim 5, **characterized in that** at least a pair of first stop ends are provided on the upper rail-first outer side, wherein the first holding bracket is arranged between the first stop ends.
